# EUROPÄISCHE PATENTANMELDUNG

(11) **EP 0 865 204 A2**
(43) Veröffentlichungstag der Anmeldung: **16.09.1998**
(21) Anmeldenummer: 98102348.4
(22) Anmeldetag: 11.02.1998
(51) Int. Cl.: H04N 5/782

(54) **Videogerät**

(30) Priorität: 14.02.1997 DE 19705665
(71) Anmelder: Barnowsky, Reinhard, 52351 Düren (DE)
(72) Erfinder: Barnowsky, Reinhard, 52351 Düren (DE)

(57) **Zusammenfassung**

Ein Videogerät umfaßt einen Video-Signaleingang (18, 28) zum Anschluß an eine Satellitenschüssel (12), einen Video-Signalausgang (36) zum Anschluß an ein Fernsehgerät (14), eine Steuerung (20), und einen Signalspeicher (34). Wenn der Speicher (34) von der Steuerung einen Aufzeichnungsbefehl erhält, zeichnet er das am Signaleingang anliegende Videosignal solange auf, bis er einen Aufzeichnungsendebefehl erhält, und er setzt diese Aufzeichnung fort, wenn er einen von dem Aufzeichnungsendebefehl verschiedenen Steuerbefehl erhält. Wenn er einen Normalwiedergabebefehl erhält, gibt er das aufgezeichnete Signal mit normaler Wiedergabegeschwindigkeit an den Signalausgang aus.

Der Anwender kann sich vor dem Ende der ausgestrahlten Sendung den aufgezeichneten Teil ansehen, ohne den zwischenzeitlich ausgestrahlten Teil zu verpassen, da dieser weiter aufgezeichnet wird. Wegen der Aufzeichnung im Hintergrund kann er auf den aufgezeichneten Teil mit den von Videorecordern bekannten Funktionen wie schneller Vor- und Rücklauf, Zeitlupe und -raffer, Suchlauf, usw. zuzugreifen.

## Beschreibung

Die vorliegende Erfindung betrifft ein Videogerät zur Aufzeichnung von Videosignalen und zur Wiedergabe aufgezeichneter Videosignale bei fortgesetzter Aufzeichnung gemäß dem Oberbegriff des Patentanspruchs 1 oder 6.

Bekannt sind sogenannte Videorecorder, die ein über einen Video-Signaleingang eingespeistes Videosignal, wie zum Beispiel von einer ausgestrahlten Fernsehsendung, mit Hilfe eines Videokopfes auf einem Magnetband als Speichermedium aufzeichnen. Wenn sich der Anwender die aufgezeichnete Sendung ansehen will, stoppt er die Aufzeichnung, spult das Magnetband zurück und startet die Wiedergabe. Diese erfolgt mit Hilfe des Videokopfes, der das aufgezeichnete Signal vom Magnetband abliest und dem Video-Signalausgang zuführt.

Der Anwender kann sich beispielsweise parallel zu der Aufzeichnung entweder die gerade aufgezeichnete Sendung oder die auf einem anderen Kanal ausgestrahlte Sendung ansehen. Falls er sich jedoch eine bestimmte Szene der aufgezeichneten Sendung noch einmal, beispielsweise in Zeitlupe, ansehen möchte, dann muß er entweder in Kauf nehmen, den während dieser Zeit ausgestrahlten Teil der Sendung zu verpassen, oder bis zum Ende der ausgestrahlten Sendung warten.

Ein Videogerät gemäß dem Oberbegriff des Patentanspruchs 1 oder 6 ist aus der US-5 357 383 bekannt. Bei diesem Videogerät sind ein Aufnahmekopf und ein Wiedergabekopf oberhalb einer Videokassette angeordnet, die nebeneinander drei Fächer aufweist. Das endlose Magnetband wird an dem Aufnahmekopf vorbeigefuhrt und von einer angetriebenen Rolle von oben in das erste Fach geschoben. Das Band fällt auf den Boden des ersten Faches und häuft sich unter Bildung von Schlingen auf. Durch eine Öffnung am Boden des ersten Faches wird das Magnetband von einer weiteren angetriebenen Rolle in das zweite Fach hinein- und oben aus diesem herausgezogen, dann an dem Wiedergabekopf vorbeigefuhrt und dann von oben in das dritte Fach geschoben. Dort fällt das Band wieder auf den Boden und häuft sich unter Bildung von Schlingen auf. Falls der Anwender das Magnetband zurückspulen will, um die Wiedergabe eines bestimmten Abschnitt der aufgezeichneten Sendung zu wiederholen, wird das Magnetband von einer dritten angetriebenen Rolle aus dem dritten Fach herausgezogen und in das zweite Fach hineingeschoben. Dort fällt das Band wieder auf den Boden und häuft sich unter Bildung von Schlingen auf.

Da sich das Magnetband in den Fächern unter Bildung von Schlingen aufhäuft, besteht die Gefahr, daß sich die Schlingen zu Knoten zusammenziehen und es zu einem Bandstau kommt.

Ein ähnliches Videogerät wird in der WO 94/24818 offenbart. Dieses Videogerät weist Bandmagazine in Form einer flachen Dose mit zueinander parallelen Wänden auf, deren Abstand nur geringfügig größer als die Breite des Magnetbandes ist. Das Magnetband kann ohne weitere Lenkung mit einer Einschubrolle in den Bandpuffer eingeschoben werden, wobei sich das Magnetband unter dem Einfluß der Schwerkraft in Schleifenform legt. Es kann aber auch eine Führungseinrichtung in Form eines hin- und hergehenden Armes vorgesehen sein, der eine Gabel oder Öse trägt und im Zuge seiner hin- und hergehenden Bewegung das Magnetband in mäanderförmige Schleifen legt.

Obwohl die Schleifen lose nebeneinanderstehend in dem Magazin dargestellt sind, besteht auch hier die Gefahr eines Bandstaus, da die Schleifen auf Grund der Dünnheit des Bandmaterials nicht stehenbleiben werden, sondern zu einem ungeordneten Haufen zusammensinken werden.

Es ist daher Aufgabe der Erfindung, ein Videogerät zu schaffen, das einen Bandstau in dem Bandpuffer verhindert.

Diese Aufgabe wird durch ein Videogerät gemäß Patentanspruch 1 oder 6 gelöst.

Die Umlenkrollen sorgen dafür, daß die schlingenförmige Anordnung des Magnetbandes in dem Bandpuffer aufrechterhalten bleibt. Dadurch wird ein Bandstau erfolgreich verhindert.

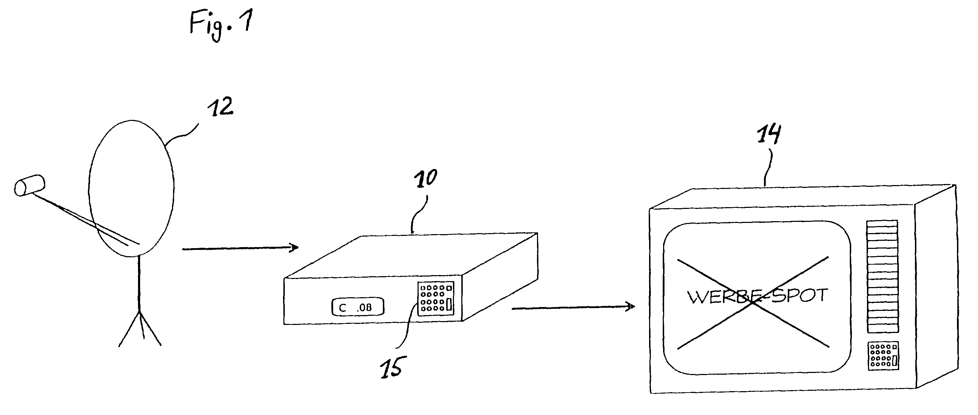

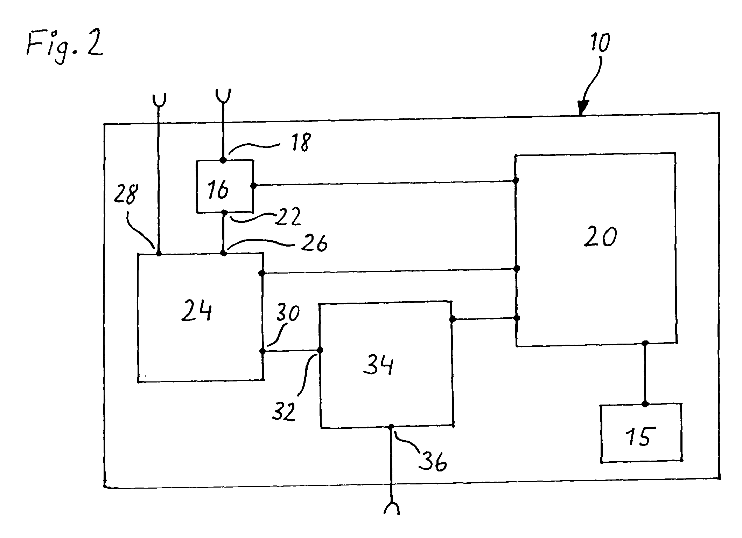

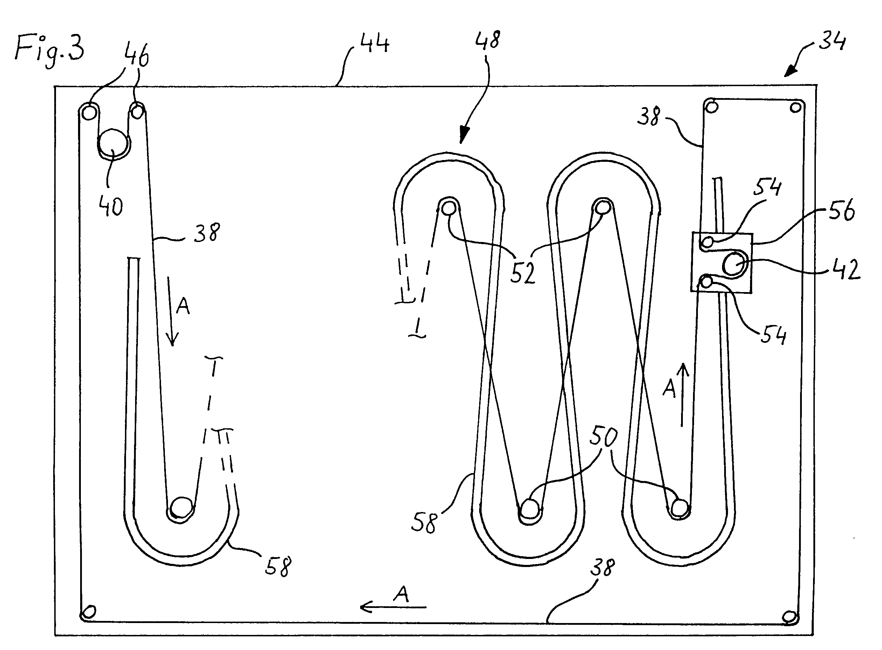

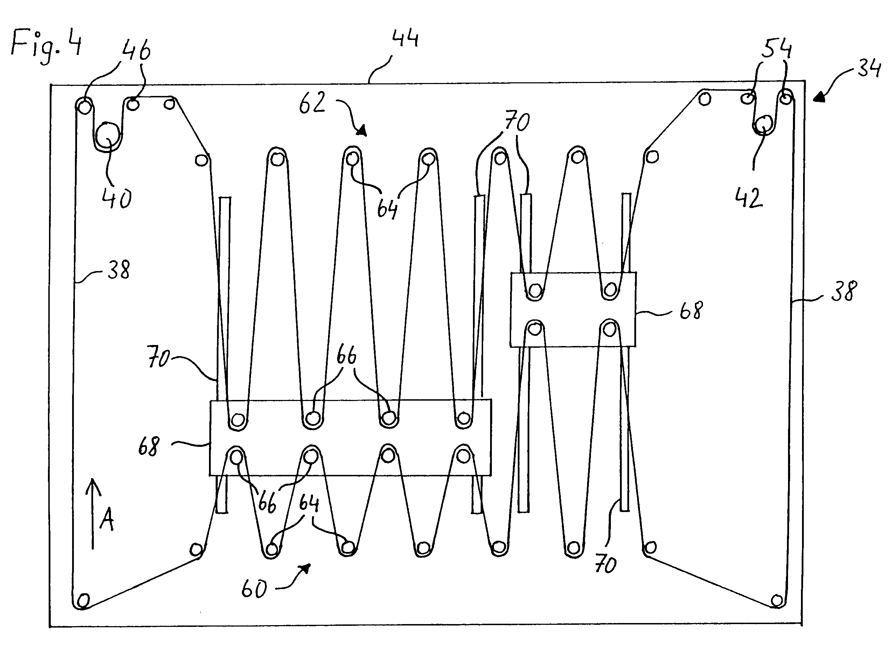

## Patentansprüche

1. Videogerät zur Aufzeichnung von Videosignalen und zur Wiedergabe aufgezeichneter Videosignale bei fortgesetzter Aufzeichnung, mit:
- einem Video-Signaleingang (18, 28) zum Anschluß an eine Antenne, eine Satellitenschüssel (12), eine Kabelanlage, einen Fernsehtuner, einen Videorecorder oder eine ähnliche Signalquelle;
- einem Video-Signalausgang (36) zum Anschluß an einen Monitor, ein Fernsehgerät (14), einen Videorecorder oder ein ähnliches Endgerät;
- einer Steuerung (20) zur Erzeugung und Abgabe von Steuerbefehlen; und
- einem Signalspeicher (34), der mit dem Signaleingang (18, 28), dem Signalausgang (36) und der Steuerung (20) verbunden ist und ein Magnetbandlaufwerk umfaßt, das ein als Endlosband ausgebildetes Magnetband (38), einen Aufnahmekopf (40), einen Wiedergabekopf (42), einen Wiedergabepuffer (62), der dazu dient, einen Bandvorrat vor dem Wiedergabekopf (42) aufzunehmen, und einen Aufnahmepuffer (60) aufweist, der dazu dient, einen Bandvorrat vor dem Aufnahmekopf (40) aufzunehmen, wobei das Magnetband (38) mit im wesentlichen konstanter Geschwindigkeit an dem Aufnahmekopf (40) vorbeigeführt wird, dann den Wiedergabepuffer (62) durchläuft, dann an dem Wiedergabekopf (42) vorbeigeführt wird, dann den Aufnahmepuffer (60) durchläuft und schließlich zurück zum Aufnahmekopf (40) läuft, und wobei die Relativgeschwindigkeit zwischen Magnetband (38) und Wiedergabekopf (42) veränderbar ist,
dadurch **gekennzeichnet**, daß
- in jedem Bandpuffer (60, 62) zwei im wesentlichen parallele Reihen von Umlenkrollen (64, 66) vorgesehen sind und das Magnetband (38) zwischen den Umlenkrollen (66) der ersten Reihe und den Umlenkrollen (64) der zweiten Reihe abwechselnd hin- und herläuft;
- der Wiedergabekopf (42) ortsfest ist; und
- in jedem Bandpuffer (60, 62) die Umlenkrollen (64) der ersten Reihe ortsfest und die Umlenkrollen (66) der zweiten Reihe auf wenigstens einem Schlitten (68) angeordnet sind, der längs einer Führung (70) verfahrbar ist, um die Relativgeschwindigkeit zwischen Magnetband (38) und Wiedergabekopf (42) zu ändern.

2. Videogerät nach Anspruch 1, dadurch **gekennzeichnet**, daß jeder Schlitten (68) im wesentlichen rechtwinklig zu der ersten Reihe verfahrbar ist.

3. Videogerät nach Anspruch 1 oder 2, dadurch **gekennzeichnet**, daß die Umlenkrollen (66) der zum Wiedergabepuffer (62) gehörenden zweiten Reihe gemeinsam mit den Umlenkrollen (66) der zum Aufnahmepuffer (60) gehörenden zweiten Reihe auf den Schlitten (68) angeordnet sind.

4. Videogerät nach einem der Ansprüche 1 bis 3, dadurch **gekennzeichnet**, daß die Führung (70) ein Schienensystem umfaßt und jeder Schlitten (68) dazu passende Räder aufweist.

5. Videogerät nach einem der Ansprüche 1 bis 3, dadurch **gekennzeichnet**, daß die Führung (70) eine Nut umfaßt und jeder Schlitten (68) mit der Nut zusammenarbeitende Stifte aufweist.

6. Videogerät zur Aufzeichnung von Videosignalen und zur Wiedergabe aufgezeichneter Videosignale bei fortgesetzter Aufzeichnung, mit:
- einem Video-Signaleingang (18, 28) zum Anschluß an eine Antenne, eine Satellitenschüssel (12), eine Kabelanlage, einen Fernsehtuner, einen Videorecorder oder eine ähnliche Signalquelle;
- einem Video-Signalausgang (36) zum Anschluß an einen Monitor, ein Fernsehgerät (14), einen Videorecorder oder ein ähnliches Endgerät;
- einer Steuerung (20) zur Erzeugung und Abgabe von Steuerbefehlen; und
- einem Signalspeicher (34), der mit dem Signaleingang (18, 28), dem Signalausgang (36) und der Steuerung (20) verbunden ist und ein Magnetbandlaufwerk umfaßt, das ein als Endlosband ausgebildetes Magnetband (38), einen Aufnahmekopf (40), einen Wiedergabekopf (42) und einen Wiedergabepuffer (48) aufweist, der dazu dient, einen Bandvorrat vor dem Wiedergabekopf (42) aufzunehmen, wobei das Magnetband (38) mit im wesentlichen konstanter Geschwindigkeit an dem Aufnahmekopf (40) vorbeigeführt wird, dann den Wiedergabepuffer (48) durchläuft, dann an dem Wiedergabekopf (42) vorbeigeführt wird und schließlich zurück zum Aufnahmekopf (40) läuft, und wobei die Relativgeschwindigkeit zwischen Magnetband (38) und Wiedergabekopf (42) veränderbar ist,
dadurch **gekennzeichnet**, daß
- in dem Wiedergabepuffer (48) zwei im wesentlichen parallele Reihen von Umlenkrollen (50, 52) vorgesehen sind und das Magnetband (38) zwischen den Umlenkrollen (50) der ersten Reihe und den Umlenkrollen (52) der zweiten Reihe abwechselnd hin- und herläuft; und
- der Wiedergabekopf (42) innerhalb des Wiedergabepuffers (48) längs des Magnetbandes (38) verfahrbar ist, um die Relativgeschwindigkeit zwischen Magnetband (38) und Wiedergabekopf (42) zu ändern.

7. Videogerät nach Anspruch 6, dadurch **gekennzeichnet**, daß der Wiedergabekopf (42) auf einem Schlitten (56) gelagert ist, der längs einer Führung (58) verfahrbar ist.

8. Videogerät nach Anspruch 7, dadurch **gekennzeichnet**, daß die Führung (58) im wesentlichen längs der zwischen den Umlenkrollen (50, 52) hin- und hergehenden Bahn des Magnetbandes (38) verläuft.

9. Videogerät nach Anspruch 8, dadurch **gekennzeichnet**, daß die Führung (58) jede Umlenkrolle (50, 52) so umrundet, daß der Schlitten (56) außen um die Umlenkrolle (50, 52) geführt wird.

10. Videogerät nach einem der Ansprüche 7 bis 9, dadurch **gekennzeichnet**, daß die Führung (58) ein Schienensystem umfaßt und der Schlitten (56) dazu passende Räder aufweist.

11. Videogerät nach einem der Ansprüche 7 bis 9, dadurch **gekennzeichnet**, daß die Führung (58) ein Zahnstangensystem umfaßt und der Schlitten (56) dazu passende Zahnräder aufweist.

12. Videogerät nach einem der Ansprüche 7 bis 9, dadurch **gekennzeichnet**, daß die Führung (58) eine Nut umfaßt und der Schlitten (56) mit der Nut zusammenarbeitende Stifte aufweist.

13. Videogerät nach einem der vorhergehenden Ansprüche, dadurch **gekennzeichnet**, daß die Umlenkrollen (50, 52; 64, 66) untereinander im wesentlichen parallel sind.

14. Videogerät nach einem der vorhergehenden Ansprüche, dadurch **gekennzeichnet**, daß die Umlenkrollen (50, 52; 64, 66) im wesentlichen rechtwinklig zur Transportrichtung (A) des Magnetbandes (38) sind.

15. Videogerät nach einem der vorhergehenden Ansprüche, dadurch **gekennzeichnet**, daß der Signalspeicher (34), wenn er von der Steuerung (20) einen Normalwiedergabebefehl erhält, das aufgezeichnete Signal derart an den Signalausgang (36) ausgibt, daß die Wiedergabegeschwindigkeit um höchstens 5 % niedriger als die Aufzeichnungsgeschwindigkeit ist.
